# EUROPEAN PATENT SPECIFICATION

(11) **EP 2 784 892 B1**
(45) Date of publication and mention of the grant of the patent: **23.09.2015**
(21) Application number: 13161874.6
(22) Date of filing: 29.03.2013
(51) Int. Cl.: H02H 7/22, H02H 7/26

(54) **Busbar protection with zone discrimination for faults between coupler circuit breaker and current transformer**
Sammelschienenschutz mit Zonenunterscheidung für Fehler zwischen Kuppeltrennschalter und Stromtransformator
Protection de jeu de barres avec discrimination de zone de défaut entre un disjoncteur de couplage et un transformateur de courant

(43) Date of publication of application: 01.10.2014
(73) Proprietor: ALSTOM Technology Ltd, 5400 Baden (CH)
(72) Inventor: PAL, Amit, Stafford, ST17 4DN (GB)
(74) Representative: Ilgart, Jean-Christophe

(56) References cited:
- EP-A2- 2 149 955
- WO-A1-00/48284
- US-A- 2 111 101

## Description

### FIELD OF THE INVENTION

The invention generally relates to the field of busbar protection in power systems and in particular to zone discrimination in an electrical bus system divided in busbar zones.

### DESCRIPTION OF THE PRIOR ART

In a power network, such as a transmission and distribution grid, the central distribution point for many feeders is the busbar system where a busbar provides common connection for several electric circuits. A busbar may for instance form part of a substation. Busbar faults, although relatively rare compared to line faults, may cause significant losses and disturbances in the power network.

The busbar configurations typically employed in any substation can be broadly classified into six categories:
a) Main & Transfer
b) Main 1 & Main 2
c) Main 1- Main 2 & Transfer
d) Main 1, Main 2 & Main 3
e) Mesh corner schemes
f) One & half breaker configurations

The implementation of any specific type of busbar configuration depends on various criteria's like system voltage level, required operational flexibility, possibility of maintenance of breakers or busbar, criticality of the load and assurance of continuity of supply for any scheduled or unscheduled outage of the Main bus bars.

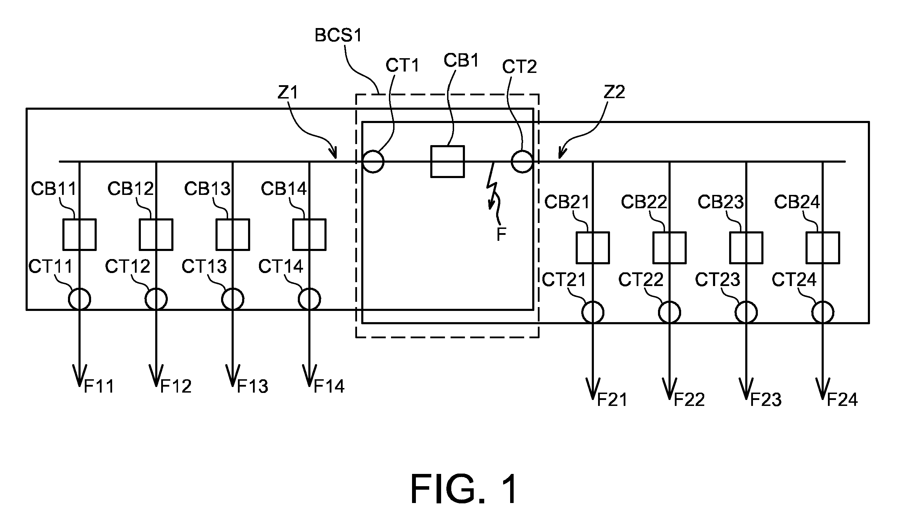

Figure 1 shows a single bus system with bus sectionalizer. The bus comprises a first busbar zone Z1 and a second busbar zone Z2. Feeder bays F11, F12, F13, F14, to which respective current transformers CT11, CT12, CT13, CT14 are associated, are connectable to the first busbar zone Z1 by means of respective first feeder circuit breakers CB11, CB12, CB13, CB14. Feeder bays F21, F22, F23, F24, to which respective current transformers CT21, CT22, CT23, CT24 are associated, are connectable to the second busbar zone Z2 by means of respective second feeder circuit breakers CB21, CB22, CB23, CB24. The first feeder bays and the second feeder bays are coupled together, and so are the first and second busbar zones, by a bus coupling section BCS1. The bus coupling section BCS1 is an overlapping region of the first and second busbar zones Z1, Z2 in which is arranged a circuit breaker CB1 and two current transformers CT1, CT2, one on each side of the circuit breaker CB1.

If a fault F occurs in the bus coupling section BCS1 between a current transformer and the circuit breaker, then this fault falls in the overlapping region which can be identified as a differential by both zone 1 and zone 2 elements.

The major drawback of such scheme is that it cannot be discriminated whether the fault is on the left hand side or on the right hand side of the circuit breaker CB1.

According to a first tripping methodology, since the fault cannot be discriminated effectively, a simultaneous trip is issued to both zones. As a consequence, both busbar zones Z1, Z2 are loosed, leading to the total outage in the substation. In particular, the healthy busbar zone is tripped for a fault occurring in the adjacent busbar zone.

In another tripping methodology, instead of tripping both busbar zones together and loosing the entire bus, a sequential approach is adopted. A trip is first issued to the circuit breaker CB1 and the topology waits for the circuit breaker CB1 to open. Once the circuit breaker CB1 trips successfully, then one of the busbar zone gets stabilized whereas the faulty zone differential still remains active high. Thus identifying this, it leads to the tripping of the faulty zone alone and saves the healthy zone.

Major drawback of this second methodology is that there is an additional delay in fault clearing which is equal to the trip time of circuit breaker + auxiliaries + master trip relays + relay topology refresh time. Typically this delay can be of the order of 80-100ms. At EHV (Extra High Voltage) and UHV (Ultra Large Voltage) levels, such delayed tripping may not be acceptable for bus faults, due to system stability concerns.

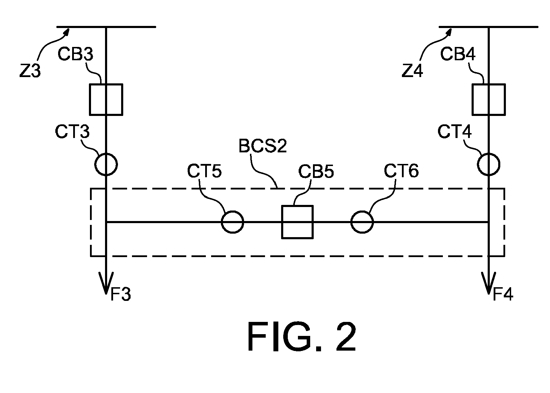

Figure 2 shows a One & Half breaker bus system where the same problem is experienced due to a lack of zone discrimination for faults occurring between the circuit breaker of the bus coupling section and one of its associated current transformer.

On figure 2, two busbar zones Z3, Z4 are arranged according to a 1.5 breaker bus configuration. A first feeder bay F3 to which a current transformer CT3 is associated, is connectable to the first busbar zone Z3 by means of a first feeder circuit breaker CB3. A second feeder bay F4, to which a respective current transformer CT4 is associated, is connectable to the second busbar zone Z4 by means of a second feeder circuit breaker CB4. The first feeder bay and the second feeder bay are coupled together by a bus coupling section BCS2 which is a tie coupling section to which each bus bar zone Z3, Z4 is connectable by means of the first and second feeder circuit breakers CB3, CB4, respectively.

In the same manner as for the busbar arrangement of figure 1, the bus coupling section BCS2 of the 1.5 breaker bus configuration comprises a circuit breaker CB5 (tie breaker) and two current transformers CT5, CT6, one on each side of the circuit breaker CB5.

It appears that the traditional bus bar protection solutions are not discriminative for faults occurring in the bus coupling section between the circuit breaker and one of its associated current transformer. This leads either to instantaneous tripping but with the healthy zone also being disconnected, or to delay tripping, both being inacceptable.

WO00/48284 reflects an example of such prior art bus systems.

### SUMMARY OF THE INVENTION

The invention aims at overcoming the above mentioned limitations of the traditional bus bar protection solutions, and proposes to this effect an electrical bus system comprising a first busbar zone and a second busbar zone, at least one first feeder bay connected to the first busbar zone and at least one second feeder bay connected to the second busbar zone, the at least one first feeder bay and the at least one second feeder bay being coupled together by a bus coupling section, **characterized in that** a current transformer and two circuit breakers are arranged in the bus coupling section, said current transformer having one of said circuit breakers on each of its sides.

Certain preferred but not limiting features of this system are as follows:
- the bus coupling section comprises an overlapping region of the two busbar zones where the current transformer is arranged, and the circuit breakers of the bus coupling section are bus coupler circuit breakers;
- the two busbar zones are arranged according to a 1.5 breaker bus configuration and the bus coupling section is a tie coupling section to which each busbar zone is connected by means of a respective feeder circuit breaker;
- it further comprises a busbar protection device configured to detect a fault occurring in the bus coupling section on a side of one of the busbar zones between the current transformer and one of the circuit breakers, and upon detection of a fault to issue trip signals, for instance simultaneously, to both circuit breakers of the bus coupling section and to the at least one feeder bay connected to the busbar zone on the side of which the fault is detected;
- the current transformer of the bus coupling section is an optical current transformer;
- the circuit breakers of the bus coupling section are connected in series and rated equal to half the system voltage, and the current transformer is arranged at the centre point of the circuit breakers;
- the current transformer of the bus coupling section is installed in close proximity to the circuit breakers of the bus coupling section at a distance lower than 1 meter, more preferably at a distance lower than 50 cm, still more preferably at a distance lower than 30 cm, still more preferably at a distance lower than 10 cm, still more preferably at a distance lower than 5 cm.

### DESCRIPTION OF THE DRAWINGS

Other aspects, goals, advantages and features of the invention will appear more clearly on reading the following detailed description of preferred embodiments thereof, given by way of non-limiting example and with reference to the accompanying drawing in which:
- figure 1, already discussed, shows a prior art Main 1 & Main 2 bus bar configuration;
- figure 2, already discussed, show a prior art 1.5 breaker bus configuration;
- figures 3a-3b show electrical bus systems according to possible embodiments of the invention based on the Main 1 & Main 2 bus bar configuration;
- figures 4a-4b show electrical bus systems according to possible embodiments of the invention based on the 1.5 breaker bus configuration;
- figures 5a-5d show bus coupling circuits which can be used in embodiments of the invention, each having an optical current transformer mounted between two circuit breakers.

### DESCRIPTION OF PREFERRED EMBODIMENTS

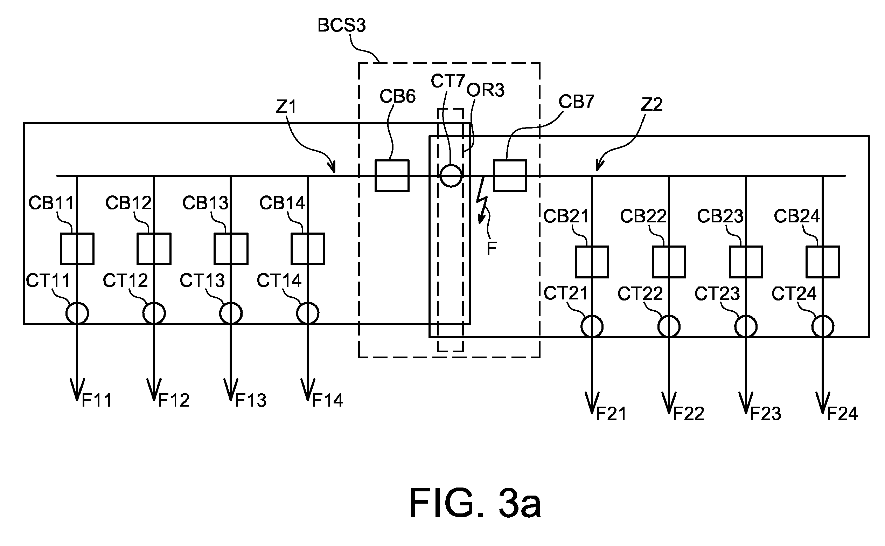

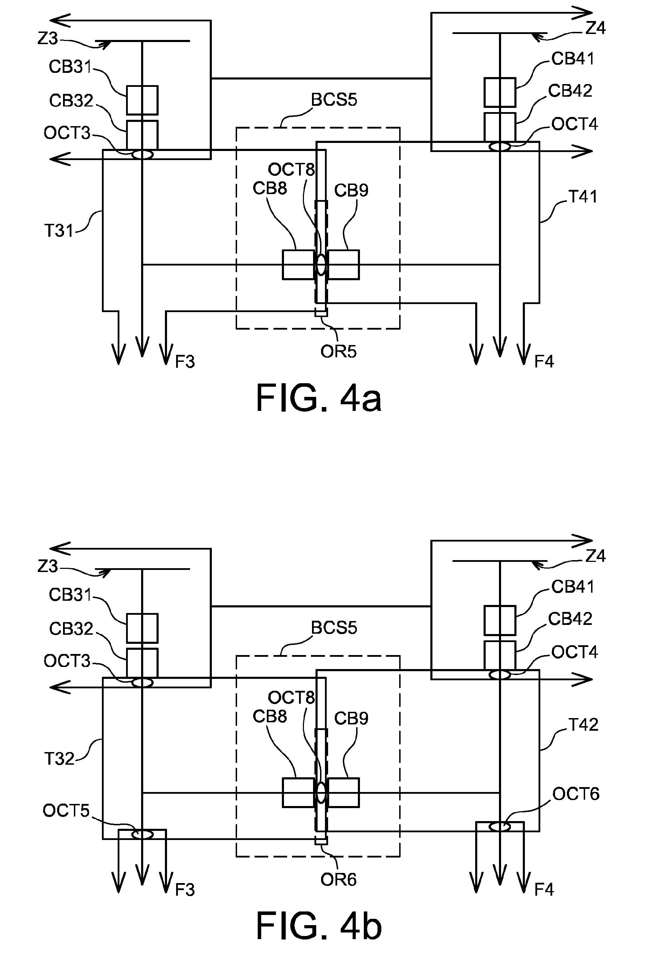

The following description is made with reference in particular to figures 3a-3b and figures 4a-4b which respectively show electrical bus systems according to possible embodiments of the invention based on the Main 1 & Main 2 bus bar configuration (the prior art configuration thereof being illustrated on figure 1), and based on the 1.5 breaker bus configuration (the prior art configuration thereof being illustrated on figure 2).

The invention relates to an electrical bus system comprising a first busbar zone Z1, Z3 and a second busbar zone Z2, Z4, at least one first feeder bay F11-F14, F3 being connectable to the first busbar zone Z1, Z3 and at least one second feeder bay F21-F24, F4 being connectable to the second busbar zone Z2, Z4. The at least one first feeder bay and the at least one second feeder bay are coupled together by a bus coupling section BCS3, BSC4, BCS5.

As shown on figures 3a-3b, the two busbar zones 21, Z2 can be arranged according to a Main 1 & Main 2 bus bar configuration with the bus coupling section BCS3, BCS4 comprising an overlapping region OR3, OR4 of the two busbar zones Z1, Z2.

As shown on figures 4a-4b, the two busbar zones Z3, Z4 can be arranged according to a 1.5 breaker bus configuration with the bus coupling section BCS5 being a tie coupling section to which each busbar zone Z3, Z4 is connectable by means of at least one respective feeder circuit breaker CB31, CB32, CB41, CB42. It shall be noted that the electrical bus system of figure 4b differs from the one of figure 4a in that it comprises two additional current transformers OCT5, OCT6.

As compared to the prior art, the invention is based on a different arrangement of current transformer and circuit breaker within the bus coupling section BCS3, BCS4, BCS5. Instead of having one circuit breaker and current transformers on either side, a current transformer CT7, OCT7, OCT8 and two circuit breakers CB6, CB7, CB8, CB9 are arranged in the bus coupling section of the invention, said current transformer in the bus coupling section having one of said circuit breakers on each of its sides.

As shown of figures 3a-3b and 4a-4b, this arrangement is such that the overlapping region OR3, OR4 of the bus bar zones Z1, Z2 on figures 3a-3b is restricted to the central current transformer CT7, OCT7. In the same manner the overlapping region OR5, OR6 of the tie differential zones T31, T41 and T32, T42 on figures 4a-4b is restricted to the central current transformer OCT8. Hence a fault between the central current transformer and one of its associated circuit breakers in the bus coupling section does not fall in the overlapping region.

The electrical bus system of the invention may further comprise a busbar protection device (not shown) configured to detect a fault F (represented on figure 3a) occurring in the bus coupling section on a side of one of the busbar zones between the current transformer and one of the circuit breakers, and upon detection of a fault to issue trip signals to both circuit breakers of the bus coupling section and to the at least one feeder bay connectable to the busbar zone on the side of which the fault is detected (this busbar zone is also called faulty zone, the other one being healthy).

In an embodiment, the trip signals are issued simultaneously to both circuit breakers of the bus coupling section and to the at least one feeder bay connectable to the faulty busbar zone on the side of which the fault is detected.

The advantages of the bus coupling section in accordance with the invention are as follows.
- It allows true discrimination between the healthy busbar zone and the faulty busbar zone.
- The trip signals can be issued to the faulty zone alone, thus preventing the healthy zone from seeing a trip.
- It saves nearly 50% of the loads which are connected to the healthy busbar zone and thus saves the substation from a complete outage. In other words, it saves the substation (which have Main & Transfer, Main 1 & Main 2, Main 1- Main 2 & Transfer bus bar schemes) from a total blackout situation.
- For substations which employ Main 1, Main 2 and Main 3 bus bar arrangements, it saves the healthy busbar zone from an unwanted trip, whereas as per the simultaneous tripping method of the prior art two busbar zones would have been tripped.
- There is no compromise on time, since tripping can be issued simultaneously, at the same instant of time, to the faulty zone feeders and the two circuit breakers of the bus coupling section.
- This further ensures that there is no compromise from system stability point of view as was the case with the sequential tripping method of the prior art.

For substations with voltage level ranging from 700 kV - 1200 kV, discussing on per pole/ per phase basis, the circuit breaker of conventional bus coupling section is a series of two single physical units. As an example, if we consider an application at a voltage level of 800 kV, then the conventional circuit breaker is a series of two 400 kV units.

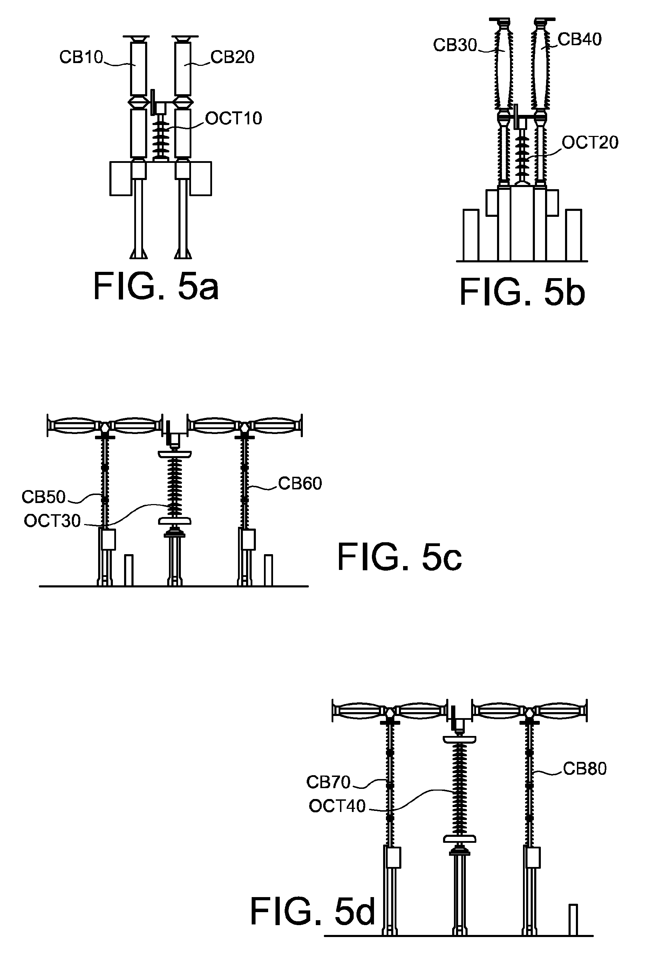

Hence, for these voltage levels, the additional circuit breaker required for achieving the invention is already available. The current transformer can be easily located in between the two circuit breakers, therefore meeting the desired objectives with the existing resources. Figure 5d illustrates such an arrangement with an optical current transformer OCT40 arranged in between two 400 kV circuit breakers CB70 and CB80 connected in series with each other for 800 kV voltage level.

Figures 4a-4b illustrate a possible embodiment of the invention for substations with voltage level ranging from 700 kV - 1200 kV. On these figures, existing circuit breakers rated at half the system voltage CB8, CB9 are indeed represented with the current transformer OCT8 arranged in between them. On these figures is also shown that the feeder circuit breakers to connect the feeder bays F3, F4 to the respective bus zone Z3, Z4 are also each a series of two single physical units CB31, CB32 and CB41, CB42 respectively.

The advantages of the proposed solution when applied at voltage levels of 700 kV - 1200 kV are thus as follows.
- The invention is feasible with the existing resources itself. There is no need for one more circuit breaker.
- The current transformer can be easily located in the centre point of the available two circuit breakers which are in series with each other.
- Compared to the traditional scheme which requires two current transformers and one circuit breaker (precisely speaking it is series of two circuit breakers, each rated equal to half of the system voltage), the invention requires only one current transformer to be located in the centre point of the available two circuit breakers. Thus the space and area requirements are much lesser when compared with the traditional scheme and therefore aids in a compact bus layout arrangement.
- One of the key advantages for this group of voltage levels which predominantly employ the 1.5 breaker bus configurations is that it saves the cost of one current transformer at the tie bus coupling section on a per bay basis. Thus the overall savings is Cost of one current transformer x Number of bays.

For substations with voltage level of 1200 kV, the circuit breakers are preferably live tank circuit breakers, although dead tank circuit breakers are generally opted for UHV level applications where voltages can be of the order of 1000 kV - 1200 kV, primarily because of space requirements and clearance issues.

With a live tank design, the circuit breaker is effectively a series of 2 circuit breakers, each rated equal to half the system voltage. It therefore proves easy to install a current transformer, in particular an optical current transformer, in the centre point of the two series connected breakers.

However, with the equivalent dead tank designs, the circuit breaker it is a single unit rated equal to the full system voltage. Implementing the invention thereby necessitates an additional dead tank circuit breaker.

For substations with voltage level ranging from 100 kV - 550 kV, once again discussing on per pole/ per phase basis, the circuit breaker of the bus coupling section is basically a single physical unit. As an example, if we consider an application at a voltage level of 550 kV, then the circuit breaker is a single unit rated for 550 kV. Therefore for such applications, the invention can be applied if one additional circuit breaker is considered. Figures 5a-5c illustrate the additional circuit breaker CB20, CB40, CB60 connected in back to back fashion with the existing circuit breaker CB10, CB30, CB50, with an optical current transformer OCT10, OCT20, OCT30 located in between the circuit breakers, for a voltage level of 100-145 kV, 245-300 kV and 550 kV respectively.

It will be noted that figures 5a-5d are elevation drawings showing the physical location or mounting of an optical current with respect to the circuit breakers. These drawings are not drawn to scale, the objective of providing this information is to help the reader in understanding the practicality of the proposed solution. In particular, optical current transformers are much more compact in real life than they visually appear on these figures.

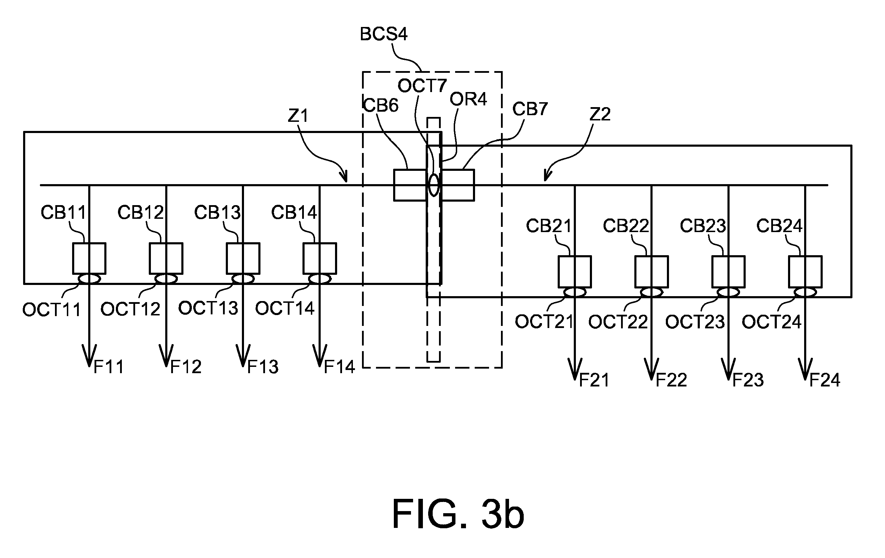

With references to figures 3b, 4a and 4b, in a preferred embodiment of the invention, the physical distance between the circuit breakers and the current transformer in the bus coupling section is reduced so that the probability of a fault occurring in the bus coupling section between the current transformer and a one of the circuit breakers is also reduced.

For this purpose, the current transformer can be mounted on the circuit breaker, or installed in close proximity to the circuit breaker at a distance lower than 1 meter, more preferably lower than 50 cm, still more preferably lower than 30 cm, still more preferably lower than 10 cm, still more preferably lower than 5 cm. In doing so, the distance is no more in multiples of meters, and the probability of a fault happening in this area nearly tends to be zero.

With conventional current transformer, it may practically be difficult to reduce the distance close to a 'zero' figure, so that the probability of a fault cannot be eliminated completely. Preferably, the current transformers of the electrical bus system of the invention are optical current transformers, such as optical current transformers from the COSI (Compact Optical Sensor Intelligence) range of current transformers.

Optical current transformers provide many advantages as compared to the conventional current transformers. Apart from the various electrical, mechanical, environment related and many more benefits which the optical current transformer provides, some of the key features which are of interest for the bus bar protection of the invention are listed below.
- Light weight. As an example, optical current transformers for 145 kV and 800 kV voltage level applications weigh roughly around 40 kg and 80 kg respectively.
- Compact design. Optical current transformers are very compact in design and less in size compared to the conventional current transformers. They typically consist of a Faraday effect ring type optical sensor on a lightweight dry- type insulator post.
- Installation flexibility. The light weight and attractive compact design adds high degree of flexibility in the installation work.
- No additional structures or civil work may be required at all. Due to its small size and less weight, it is possible to mount the optical current transformer directly on the circuit breaker itself.

As shown on figures 3b, 4a and 4b, optical current transformers may be used, not only within the bus coupling section BCS4, BCS5, but also for the other current transformers of the system, such as optical current transformers OCT11-OCT14, OCT21-OCT24, OCT3, OCT4 associated to the feeder bays F11-F14, F21-F24, F3, F4, in particular so as to reduce the distance with the corresponding feeder circuit breaker CB11-CB14, CB21-CB24, CB31, CB32, CB41, CB42.

It shall be contemplated that the invention is not limited to the electrical bus system as previously described, but also extends to a method of providing busbar protection in such an electrical bus system, in particular to a method comprising the steps of:
- detecting a fault occurring in the bus coupling section on a side of one of the busbar zones between the current transformer and one of the circuit breakers, and
- upon detection of a fault, issuing trip signals to both circuit breakers of the bus coupling section and to the at least one feeder bay connected to the busbar zone on the side of which the fault is detected.

## Claims

1. Electrical bus system comprising a first busbar zone (Z1, Z3) and a second busbar zone (Z2, Z4), at least one first feeder bay (F11, F12, F13, F14, F3) connected to the first busbar zone (Z1, Z3) and at least one second feeder bay (F21, F22, F23, F24, F4) connected to the second busbar zone (Z2, Z4), the at least one first feeder bay and the at least one second feeder bay being coupled together by a bus coupling section (BCS3, BSC4, BCS5), **characterized in that** a current transformer (CT7, OCT7, OCT8) and two circuit breakers (CB6, CB7, CB8, CB9) are arranged in the bus coupling section, said current transformer having one of said circuit breakers on each of its sides.

2. Electrical bus system according to claim 1, wherein the bus coupling section comprises an overlapping region (OR3, OR4) of the two busbar zones (Z1, Z2) where the current transformer (CT7, OCT7) is arranged, and the circuit breakers (CB6, CB7) of the bus coupling section are bus coupler circuit breakers.

3. Electrical bus system according to claim 1, wherein the two busbar zones (Z3, Z4) are arranged according to a 1.5 breaker bus configuration and wherein the bus coupling section (BCS5) is a tie coupling section to which each busbar zone (Z3, Z4) is connected by means of a respective feeder circuit breaker (CB31, CB32, CB41, CB42).

4. Electrical bus system according to any one of claims 1-3, further comprising a busbar protection device configured to detect a fault (F) occurring in the bus coupling section on a side of one of the busbar zones between the current transformer and one of the circuit breakers, and upon detection of a fault to issue trip signals to both circuit breakers of the bus coupling section and to the at least one feeder bay connected to the busbar zone on the side of which the fault is detected.

5. Electrical bus system according to claim 4, wherein the busbar protection device is configured to issue said trip signals simultaneously to said both circuit breakers of the bus coupling section and to said at least one feeder bay connected to the busbar zone on the side of which the fault is detected.

6. Electrical bus system according to any one of claims 1-5, wherein the current transformer of the bus coupling section is an optical current transformer (OCT7, OCT8).

7. Electrical bus system according to any one of claims 1-6, wherein the circuit breakers of the bus coupling section are connected in series and rated equal to half the system voltage, and wherein the current transformer is arranged at the centre point of the circuit breakers.

8. Electrical bus system according to any one of claims 1-7, wherein the current transformer of the bus coupling section is installed in close proximity to the circuit breakers of the bus coupling section at a distance lower than 1 meter, more preferably at a distance lower than 50 cm, still more preferably at a distance lower than 30 cm, still more preferably at a distance lower than 10 cm, still more preferably at a distance lower than 5 cm.

9. Method of providing busbar protection in an electrical bus system comprising a first busbar zone (Z1, Z3) and a second busbar zone (Z2, Z4), at least one first feeder bay (F11, F12, F13, F14, F3) connected to the first busbar zone (Z1, Z3) and at least one second feeder bay (F21, F22, F23, F24, F4) connected to the second busbar zone (Z2, Z4), the at least one first feeder bay and the at least one second feeder bay being coupled together by a bus coupling section (BCSBCS3, BSC4, BCS5), wherein a current transformer (CT7, OCT7, OCT8) and two circuit breakers (CB6, CB7, CB8, CB9) are arranged in the bus coupling section, said current transformer in the coupling section having one of said circuit breakers on each of its sides,
the method comprising the steps of:
- detecting a fault (F) occurring in the bus coupling section on a side of one of the busbar zones between the current transformer and one of the circuit breakers, and
- upon detection of a fault, issuing trip signals to both circuit breakers of the bus coupling section and to the at least one feeder bay connected to the busbar zone on the side of which the fault is detected.

## Patentansprüche

1. Elektrisches Sammelschienensystem, umfassend eine erste Sammelschienenzone (Z1, Z3) und eine zweite Sammelschienenzone (Z2, Z4), wenigstens eine erste Zufuhrleitung (F11, F12, F13, F14, F3), die mit der ersten Sammelschienenzone (Z1, Z3) verbunden ist, und wenigstens eine zweite Zufuhrleitung (F21, F22, F23, F24, F4), die mit der zweiten Sammelschienenzone (Z2, Z4) verbunden ist, wobei die wenigstens erste Zufuhrleitung und die wenigstens zweite Zufuhrleitung miteinander durch einen Sammelschienenabschnitt (BCS3, BSC4, BCS5) verbunden sind, **dadurch gekennzeichnet, daß** ein Stromtransformator (CT7, OCT7, OCT8) und zwei Schaltungsunterbrecher (CB6, CB7, CB8, CB9) in dem Sammelleitungsabschnitt angeordnet sind, und daß der Stromtransformator auf jeder seiner Seiten einen der Schaltungsunterbrecher aufweist.

2. Elektrisches Sammelschienensystem nach Anspruch 1, **dadurch gekennzeichnet, daß** der Sammelschienen-Kupplungsabschnitt einen Überlappungsbereich (OR3, OR4) der beiden Sammelschienenzonen (Z1, Z2) aufweist, wo der Stromtransformator (CT7, OCT7) angeordnet ist, und daß die Schaltungsunterbrecher (CB6, CB7) des Sammelschienen-Kupplungsabschnitts Sammelschienen-Kupplungsschaltungsunterbrecher sind.

3. Elektrisches Sammelschienensystem nach Anspruch 1, **dadurch gekennzeichnet, daß** die beiden Sammelschienenzonen (Z3, Z4) gemäß einer 1,5 Unterbrecher- Sammelschienenkonfiguration angeordnet sind, und daß der Sammelschienen-Kupplungsabschnitt (BCS5) ein Verankerungskupplungsabschnitt ist, bei dem jede Sammelschienenzone (Z3, Z4) durch einen entsprechenden Zufuhrschaltungsunterbrecher (CB31, CB32, CB41, CB42) verbunden ist.

4. Elektrisches Sammelschienensystem nach einem der Ansprüche 1 bis 3, ferner **gekennzeichnet durch** eine Sammelschienen-Schutzvorrichtung, die so gestaltet ist, daß ein Fehler (F), der in dem Sammelschienen-Kupplungsabschnitt auf einer Seite einer der Sammelschienenzonen zwischen dem Stromtransformator und einem der Schaltungsunterbrecher auftritt, festgestellt wird, und daß nach der Feststellung eines Fehlers an beide Schaltungsunterbrecher des Sammelschienen-Kupplungsabschnitts und an die wenigstens eine Zufuhrschiene, die mit der Sammelschienenzone auf der Seite verbunden ist, auf der der Fehler festgestellt wurde, Schaltsignale abgegeben werden.

5. Elektrisches Sammelschienensystem nach Anspruch 4, **dadurch gekennzeichnet, daß** die Sammelschienen-Schutzvorrichtung so gebaut ist, daß die besagten Schaltsignale gleichzeitig an die beiden Schaltungsunterbrecher des Schaltschienen-Kupplungsabschnittes und an die wenigstens eine Zufuhrschiene abgegeben werden, die mit der Sammelschienenzone auf der Seite verbunden ist, auf der der Fehler festgestellt wurde.

6. Elektrisches Sammelschienensystem nach einem der Ansprüche 1 bis 5, **dadurch gekennzeichnet, daß** der Stromtransformator des Sammelschienen-Kupplungsabschnittes ein optischer Stromtransformator (OCT7, OCT8) ist.

7. Elektrisches Sammelschienensystem nach einem der Ansprüche 1 bis 6, **dadurch gekennzeichnet, daß** die Schaltungsunterbrecher des Sammelschienen- Kupplungsabschnittes in Reihe geschaltet und für die halbe Systemspannung bemessen sind, so daß der Stromtransformator im Mittelpunkt der Schaltungsunterbrecher angeordnet ist.

8. Elektrisches Sammelschienensystem nach einem der Ansprüche 1 bis 7, **dadurch gekennzeichnet, daß** der Stromtransformator des Sammelschienen-Kupplungsabschnittes ganz in der Nähe der Schaltungsunterbrecher des Sammelschienen- Kupplungsabschnittes in einer Entfernung von weniger als 1 Meter, vorzugsweise in einer Entfernung von weniger als 50 cm, noch mehr vorzugsweise in einer Entfernung von weniger als 30 cm, noch mehr vorzugsweise in einer Entfernung von weniger als 10 cm und noch mehr vorzugsweise in einer Entfernung von weniger als 5 cm angeordnet ist.

9. Verfahren zur Schaffung eines Sammelschienenschutzes in einem elektrischen Sammelschienensystem, umfassend eine erste Sammelschienenzone (Z1, Z3) und eine zweite Sammelschienenzone (Z2, Z4), wenigstens eine erste Zufuhrleitung (F11, F12, F13, F14, F3), die mit der ersten Sammelschienenzone (Z1, Z3) verbunden ist, und wenigstens eine zweite Zufuhrleitung (F21, F22, F23, F24, F4), die mit der zweiten Sammelschienenzone (Z2, Z4) verbunden ist, wobei die wenigstens eine erste Zufuhrleitung und die wenigstens eine zweite Zufuhrleitung mit einander durch einen Sammelschienen-Kupplungsabschnitt (BCSBCS3, BSC4, BCS5) gekoppelt werden, wobei ein Stromtransformator (CT7, OCT7, OCT8) und zwei Schaltungsunterbrecher (CB6, CB7, CB8, CB9) in dem Sammelschienen-Kupplungsabschnitt angeordnet werden, und wobei schließlich der Stromtransformator in dem Kupplungsabschnitt auf jeder seiner Seiten einen der Schaltungsunterbrecher aufweist, **dadurch gekennzeichnet, daß** das Verfahren die folgenden Schritte hat: Ermitteln eines Fehlers (F), der in dem Sammelschienen-Kupplungsabschnitt auf einer Seite einer der Sammelschienenzonen, zwischen dem Stromtransformator und einem der Schaltungsunterbrecher auftritt, und nach Feststellung eines Fehlers Aussenden von Schaltsignalen an beide Schaltungsunterbrecher des Sammelschienen-Kupplungsabschnittes und an die wenigstens eine Zufuhrleitung, die mit der Sammelschienenzone auf der Seite verbunden ist, auf der der Fehler festgestellt wird.

## Revendications

1. Système de bus électrique comprenant une première zone de jeu de barres (Z1, Z3) et une seconde zone de jeu de barres (Z2, Z4), au moins une première baie d'alimentation (F11, F12, F13, F14, F3) connectée à la première zone de jeu de barres (Z1, Z3) et au moins une seconde baie d'alimentation (F21, F22, F23, F24, F4) connectée à la seconde zone de jeu de barre (Z2, Z4), la au moins une première baie d'alimentation et la au moins une seconde baie d'alimentation étant couplées ensemble par une section de couplage de bus (BCS3, BSC4, BCS5),
**caractérisé en ce qu'**un transformateur de courant (CT7, OCT7, OCT8) et deux disjoncteurs (CB6, CB7, CB8, CB9) sont agencés dans la section de couplage de bus, ledit transformateur de courant ayant l'un desdits disjoncteurs sur chacun de ses côtés.

2. Système de bus électrique selon la revendication 1, dans lequel la section de couplage de bus comprend une région de chevauchement (OR3, OR4) des deux zones de jeu de barres (Z1, Z2) où le transformateur de courant (CT7, OCT7) est agencé, et les disjoncteurs (CB6, CB7) de la section de couplage de bus sont des disjoncteurs de coupleurs de bus.

3. Système de bus électrique selon la revendication 1, dans lequel les deux zones de jeu de barres (Z3, Z4) sont agencées selon une configuration de bus de disjoncteur 1.5 et dans lequel la section de couplage (BCS5) est une section de couplage d'attache à laquelle chaque zone de jeu de barres (Z3, Z4) est connectée au moyen d'un disjoncteur de ligne respectif (CB31, CB32, CB41, CB42).

4. Système de bus électrique selon l'une quelconque des revendications 1 à 3, comprenant en outre un dispositif de protection de jeux de barres configuré pour détecter une défaillance (F) ayant lieu dans la section de couplage de bus sur un côté de l'une des zones de jeu de barres entre le transformateur de courant et l'un des disjoncteurs, et lors de la détection d'une défaillance, pour émettre des signaux de déclenchement vers les deux disjoncteurs de la section de couplage de bus et vers l'au moins une baie d'alimentation connectée à la zone de jeu de barres sur le côté de laquelle la défaillance est détectée.

5. Système de bus électrique selon la revendication 4, dans lequel le dispositif de protection de jeu de barres est configuré pour émettre lesdits signaux de déclenchement simultanément vers lesdits deux disjoncteurs de la section de couplage omnibus et vers ladite au moins une baie d'alimentation connectée à la zone de jeu de barres sur le côté de laquelle la défaillance est détectée.

6. Système de bus électrique selon l'une quelconque des revendications 1 à 5, dans lequel le transformateur de courant de la section de couplage de bus est un transformateur de courant optique (OCT7, OCT8).

7. Système de bus électrique selon l'une quelconque des revendications 1 à 6, dans lequel les disjoncteurs de la section de couplage de bus sont connectés en série et imposés à la moitié de la tension du système, et dans lequel le transformateur de courant est agencé au niveau du point central des disjoncteurs.

8. Système de bus électrique selon l'une quelconque des revendications 1 à 7, dans lequel le transformateur de courant de la section de couplage de bus est installé à proximité immédiate des disjoncteurs de la section de couplage de bus à une distance inférieure à 1 mètre, de manière davantage préférée à une distance inférieure à 50 cm, de manière encore davantage préférée à une distance inférieure à 30 cm, de manière encore davantage préférée à une distance inférieure à 10 cm, de manière encore davantage préférée à une distance inférieure à 5 cm.

9. Procédé de fourniture d'une protection de jeu de barres dans un système de bus électrique comprenant une première zone de jeu de barres (Z1, Z3) et une seconde zone de jeu de barres (Z2, Z4), au moins une première baie d'alimentation (F11, F12, F13, F14, F3) connectée à la première zone de jeu de barres (Z1, Z3) et au moins une seconde baie d'alimentation (F21, F22, F23, F24, F4) connectée à la seconde zone de jeu de barres (Z2, 24), la au moins une première baie d'alimentation et la au moins une seconde baie d'alimentation étant couplées ensemble par une section de couplage de bus (BCSBCS3, BSC4, BCS5), dans lequel un transformateur de courant (CT7, OCT7, OCT8) et deux disjoncteurs (CB6, CB7, CB8, CB9) sont agencés dans la section de couplage de bus, ledit transformateur de courant dans la section de couplage ayant l'un desdits disjoncteurs sur chacun de ses côtés,
le procédé comprenant les étapes de :
- détection d'une défaillance (F) ayant lieu dans la section de couplage de bus sur un côté de l'une des zones de jeu de barres entre le transformateur de courant et l'un des disjoncteurs, et
- lors de la détection d'une défaillance, émission de signaux de déclenchement vers les deux disjoncteurs de la section de couplage de bus et vers la au moins une baie d'alimentation connectée à la zone de jeu de barres sur le côté de laquelle la défaillance est détectée.
